# EUROPÄISCHE PATENTSCHRIFT

(11) **EP 0 897 856 B1**
(45) Veröffentlichungstag und Bekanntmachung des Hinweises auf die Patenterteilung: **12.11.2003**
(21) Anmeldenummer: 98115858.7
(22) Anmeldetag: 22.08.1998
(51) Int. Cl.: B62D 33/063, A01D 90/16

(54) **Landwirtschaftlicher Selbstfahrer**
Agricultural self propelling vehicle
Autopropulseur agricole

(30) Priorität: 22.08.1997 DE 29715066 U
(43) Veröffentlichungstag der Anmeldung: 24.02.1999
(73) Patentinhaber: Hirl, Alois, 84326 Falkenberg (DE)
(72) Erfinder: Hirl, Alois, 84326 Falkenberg (DE)
(74) Vertreter: Oberhardt, Knut

(56) Entgegenhaltungen:
- US-A- 3 721 077
- US-A- 4 487 286
- PATENT ABSTRACTS OF JAPAN vol. 015, no. 064 (C-0806), 15. Februar 1991 & JP 02 291208 A (ISEKI & CO LTD), 3. Dezember 1990

## Beschreibung

Die Erfindung geht aus von einem landwirtschaftlichen Selbstfahrer nach dem Oberbegriff von Anspruch 1. Ein derartiger Selbstfahren ist aus der US-A-3 721 077 bekannt.

Solche Selbstfahrer waren bisher mit Führerkabinen ausgerüstet, die sich auf der gleichen Seite des Transportbehälters befanden wie das Arbeitsgerät an dem Ausleger. Dadurch war ein problemloses Vorwärtsfahren und auch die Steuerung des Arbeitsgerätes durch gute Übersicht gewährleistet. Bei der Rückwärtsfahrt fehlte diese Übersicht allerdings vollkommen. Weiterhin stand der Platz, den die Führerkabine einnimmt, entweder nicht für das Arbeitsgerät zur Verfügung, oder das Arbeitsgerät wurde mit dem Ausleger in Fahrtrichtung vor der Führerkabine plaziert, und es mußte eine enge Verbindung zwischen Transportbehälter und Arbeitsgerät realisiert werden, die sich begrenzend auf die Arbeitsleistung auswirkte. So mußten beispielsweise bei selbstfahrenden Silagefräsen zwischen der eigentlichen Fräse und dem Transportbehälter ein Förderkanal mit begrenztem Querschnitt und entsprechende Fördermittel angebracht werden, da - bedingt durch die Führerkabine - eine direkte Aufnahme der geschnittenen Silage in eine frontseitige Beladeöffnung des Transportbehälters nicht möglich war.

Es ist deshalb die Aufgabe der Erfindung einen landwirtschaftlichen Selbstfahrer so auszugestalten, daß das Arbeitsgerät entsprechend der Breite des Transportbehälters dimensioniert werden kann und weiterhin eine volle Überschaubarkeit des Arbeitsbereichs und des Fahrbereichs bei Vorwärts- und Rückwärtsfahrt gewährleistet ist.

Die Aufgabe wird gelöst durch einen gattungsgemäßen landwirtschaftlichen Selbstfahrer mit den kennzeichnenden Merkmalen des 1. Anspruchs. Durch die neue Anordnung der Führerkabine, kombiniert mit der Beweglichkeit in zwei Freiheitsgraden, kann erstmals die Überschaubarkeit des gesamten Artbeits- und Fahrbereichs gewährleistet werden, ohne daß die Führerkabine sich behinderd auf die Gestaltung und Dimensionierung des am Ausleger montierten Arbeitsgeräts auswirkt.

Während der normalen Vorwärtsfahrt befindet sich die Führerkabine in abgesenkter Stellung. Da sie sich über die gesamte Breite des Transportbehälters erstrecken kann. bietet sie eine, mit einem normalen Straßenfahrzeug vergleichbare Übersichtlichkeit Für die Rückwärtsfahrt oder das Rangieren in unübersichtlichem Gelände wird die Kabine angehoben und entsprechend der momentanen Fahrtrichtung gedreht. Während des Betriebs des Arbeitsgeräts befindet sich die Kabine immer in gehobenem und gedrehtem Zustand, so daß der Arbeitsbereich voll überblickt werden kann.

Da entsprechende Selbstfahrer oftmals mit einer Hydraulikanlage ausgerüstet sind, wird auch der Hub der Führerkabine vorteilhaft mit einem Hydraulikstempel betrieben.

Um eine exakte Führung zu gewährleisten und ein Verkannten während der Vertikalbewegung zu verhindern, sind zwei Säulenführungen vorgesehen, die in etwa einen Abstand entsprechend der Breite des Transportbehälters aufweisen und parallel zur benachbarten Transportbehälterwand verlaufen. Die Führerkabine steht auf einem Rahmen, der mit diesen Säulenführungen in Eingriff steht und idealerweise mittig von dem Hydraulikstempel unterstützt wird, so daß die Säulenführungen mit dem Hydraulikstempel ein statisch stabiles Dreieck bilden.

Besonders vorteilhaft wirkt sich die Erfindung auf eine selbstfahrende Silagefräse aus. Bei diesem Gerät ist an dem Ausleger eine Fräse montiert, die in etwa die Breite des Transportbehälters einnimmt. Da sich die Führerkabine auf der der Fräse gegenüberliegenden Seite des Transportbehälters befindet, kann dieser eine Einfüllöffnung über seine gesamte Breite aufweisen.

Auf diese Weise kann nach dem Absenken des Transportbehälters die Fräse das Schnittgut direkt einwerfen, ohne einen Zwischenförderer zu benötigen.

Vorteile bringt die Erfindung insbesondere dann, wenn der obere Rand des Transportbehälters mehr als 2 m über Boden liegt, so daß die der Kabine gegenüberliegende Seite ohne ein Anheben der Kabine nicht überschaubar wäre.

Weitere Vorteile der Erfindung ergeben sich aus den Unteransprüchen und werden im folgenden anhand eines Ausführungsbeispiels im Zusammenhang mit der Zeichnung eingehend erläutert.

Es zeigen:
- Figur 1: einen erfindungsgemäßen Selbstfahrer bei der Vorwärtsfahrt,
- Figur 2: den Selbstfahrer in Rangierstellung und
- Figur 3: den Kabinenrahmen in Draufsicht.

Der landwirtschaftliche Selbstfahrer ist auf einem Fahrgestell 7 aufgebaut, an dem über Achsen auch die Räder 8 befestigt sind. Direkt auf dem Fahrgestell montiert ist der Transportbehälter 3 und eine Verankerung 14, die über den Hydraulikzylinder 6 mit dem Ausleger 4 verbunden ist. Weiterhin ist der Ausleger 4 über das Gelenk 15 mit dem Transportbehälter 3 verbunden. Am freien Ende des Auslegers 4 ist die Fräse 5 zum Eintrag der Silage in den Transportbehälter gelagert.

In Fahrtrichtung vor dem Transportbehälter 3 ist der Motor- und Antriebsblock 1 mit dem Hydraulikaggregat befestigt. Die beiden Säulenführungen 11 sind mit ihrem unteren Ende im Fahrgestell 7 verankert, während die oberen Enden in hier nicht gezeigter Weise mit dem Motor- und Antriebsblock 1 verbunden sind. Die Säulenführungen 11 werden von Gleitklammern 16 umgriffen, die mit dem Rahmen 9 verbunden sind. An dem Kreuzungspunkt 13 der Diagonalstreben 12 wird der Rahmen 9 durch den Hydraulikstempel 10 unterstützt. Auf dem Kreuzungspunkt 13 ist unter Zwischenschaltung eines Hydraulikmotors eines Drehkranzes die Führerkabine 2 befestigt.

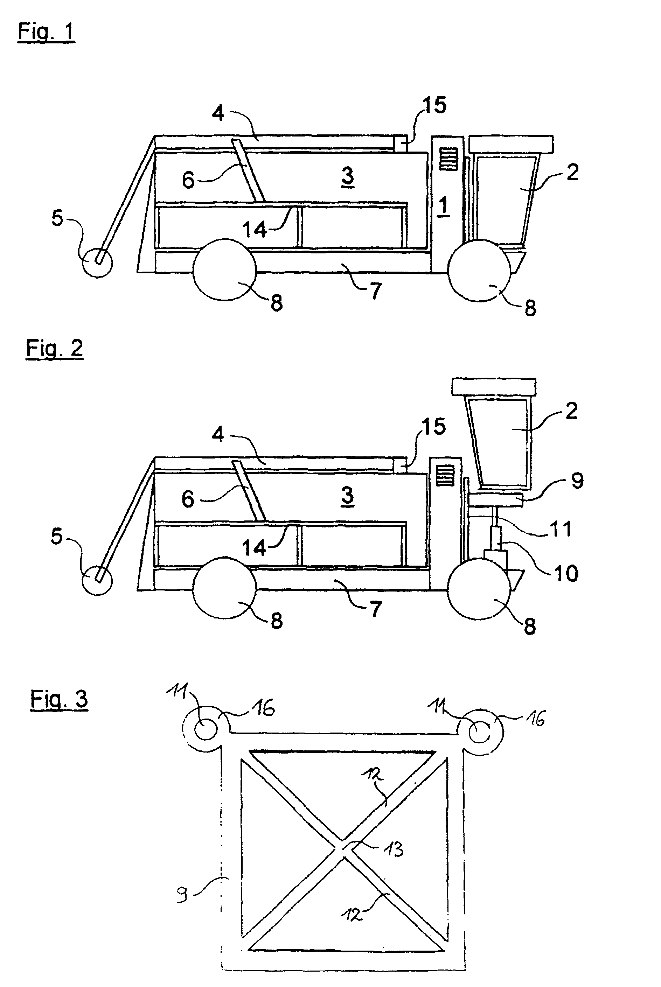

In der in Figur 1 gezeigten Stellung ist die Führerkabine 2 abgesenkt und die Bedienungsinstrumente zeigen in Fahrtrichtung nach vorne. In dieser Stellung ist der Selbstfahrer wie ein normales Straßenfahrzeug zu bewegen. Soll der Selbstfahrer in die in Figur 2 gezeigten Rangier- oder Arbeitsstellung gebracht werden, wird der Hydraulikstempel 10 ausgefahren und der Drehkranz oder Hydraulikmotor zwischen Rahmen 9 und Führerkabine 2 betätigt, so daß sich die Führerkabine um 180° verdreht. Die Vertikal- und die Drehbewegung können gekoppelt, aber auch unabhängig voneinander durchführbar sein. Da die Seitenteile und das Frontteil der Führerkabine vollständig verglast sind, ist in der in Figur 2 gezeigten Stellung eine hervorragende Übersicht gewährleistet.

Der Selbstfahrer kann nun in Rückwärtsfahrt an den Silagevorrat herangeführt werden. Über einen hier nicht gezeigten Mechanismus wird die Hinterkante des Fahrgestells 7 bis auf den Boden abgesenkt und die Ladeöffnung geöffnet. Der Fräs- und Beladevorgang kann jetzt von der angehobenen und gedrehten Führerkabine aus genau kontrolliert und verfolgt werden.

## Patentansprüche

1. Landwirtschaftlicher Selbstfahrer mit einem Transportbehälter (3), der eine Einfüllöffnung aufweist und mit einem Ausleger (4), an dem im Bereich der Front- oder Rückseite ein Arbeitsgerät (5) montiert ist, wobei auf der dem Arbeitsgerät (5) gegenüberliegenden Seite des Transportbehälters (3) eine Führerkabine (2) vorgesehen ist, die in der Höhe verfahrbar und um eine vertikale Achse drehbar angeordnet ist **dadurch gekennzeichnet, daß** sich das Arbeitsgerät (5) und die Einfüllöffnung in etwa über die Breite des Transportbehälters (3) erstrecken.

2. Landwirtschaftlicher Selbstfahrer nach Anspruch 1, **dadurch gekennzeichnet, dass** die Führerkabine (2) über einen hydraulischen Stempel (10) in der Höhe verfahrbar ist.

3. Landwirtschaftlicher Selbstfahrer nach Anspruch 2, **dadurch gekennzeichnet, dass** die Führerkabine (2) auf einem Rahmen (9) montiert ist, der mit zwei Säulenführungen (11) in Eingriff steht, die parallel zur Front- oder Rückwand des Transportbehälters (3) angeordnet sind.

4. Landwirtschaftlicher Selbstfahrer nach Anspruch 3, **dadurch gekennzeichnet, dass** die Säulenführungen (11) mit dem Hydraulikstempel (10) ein Dreieck bilden.

5. Landwirtschaftlicher Selbstfahrer nach Anspruch 2, **dadurch gekennzeichnet, dass** der Hydraulikstempel (10) in der Mitte der Führerkabine (2) angreift.

6. Landwirtschaftlicher Selbstfahrer nach Anspruch 1, **dadurch gekennzeichnet, dass** an dem Ausleger (4) eine Fräseinrichtung (5) montiert ist.

7. Landwirtschaftlicher Selbstfahrer nach Anspruch 1, **dadurch gekennzeichnet, dass** der obere Rand des Transportbehälters (3) mehr als 2 m vom Boden entfernt ist.

8. Landwirtschaftlicher Selbstfahrer nach Anspruch 1, **dadurch gekennzeichnet, dass** der Transportbehälter (3) auf der Seite der Einfüllöffnung absenkbar ist.

## Claims

1. Agricultural self-propelling vehicle with a transport container (3) having a feed opening and a cantilever arm (4) with an implement (5) mounted at the front or back wall and a driver's cabin at the wall of the transport container opposing the wall with the implement, said cabin is portable for height and pivoted round a vertical axis, **characterised in that** the implement and the feed opening span approximately the width of the transport container.

2. Agricultural self-propelling vehicle as claimed in claim 1, **characterised in that** the driver's cabin (2) is portable for height by an hydraulic plunger.

3. Agricultural self-propelling vehicle as claimed in claim 2, **characterised in that** the driver's cabin (2) is mounted on a frame (19) meshing with two die sets (11) which are parallel with the front or back wall of the transport container (3).

4. Agricultural self-propelling vehicle as claimed in claim 3, **characterised in that** the die sets (11) together with the hydraulic plunger (10) form a triangle.

5. Agricultural self-propelling vehicle as claimed in claim 2, **characterised in that** the hydraulic plunger (10) is connected with the middle of the driver's cabin (2).

6. Agricultural self-propelling vehicle as claimed in claim 1, **characterised in that** a milling cutter (5) is mounted at the implement (4)

7. Agricultural self-propelling vehicle as claimed in claim 1, **characterised in that** the upper edge of the transport container (3) is in a distance of more than two meters from the floor.

8. Agricultural self-propelling vehicle as claimed in claim 1, **characterised in that** the transport container (3) is lowerable at the side of the feed opening.

## Revendications

1. Un véhicule agricole, propulsé par soi-même, avec un container de transport (3) qui a une ouverture de remplissage et un bras (4) auquel est monté un outil (5) au front ou au dos. Au côté opposé de l'outil (5) est prévu une cabine de conducteur (2) qui est variable en hauteur et qui est arrangée d'une façon tournante autour d'un axe vertical, **caractérisé en ce que** l'outil et l'ouverture de remplissage s'étendent à peu près sur la largeur du container de transport (3).

2. Un véhicule agricole, propulsé par soi-même, selon la revendication 1, **caractérisé en ce que** la cabine de conducteur (2) est variable à l'aide d'un piston hydraulique (10).

3. Un véhicule agricole, propulsé par soi-même, selon la revendication 2, **caractérisé en ce que** la cabine de conducteur (2) est montée sur un cadre (9) qui s'engrène dans deux glissières (11), arrangées d'une façon parallèle au front ou au dos du container de transport (3).

4. Un véhicule agricole, propulsé par soi-même, selon la revendication 3, **caractérisé en ce que** les glissières (11) forment un triangle avec le piston hydraulique (10).

5. Un véhicule agricole, propulsé par soi-même, selon la revendication 2, **caractérisé en ce que** le piston hydraulique (10) joint la cabine de conducteur (2) au milieu.

6. Un véhicule agricole, propulsé par soi-même, selon la revendication 1, **caractérisé en ce qu'**un mécanisme de fraise (5) est monté au bras (4).

7. Un véhicule agricole, propulsé par soi-même, selon la revendication 1, **caractérisé en ce que** le bord supérieur du container de transport (3) est éloigné plus de deux mètres du sol.

8. Un véhicule agricole, propulsé par soi-même, selon la revendication 1, **caractérisé en ce que** le container de transport (3) peut s'abaisser au côté de l'ouverture de remplissage.
